**Europäisches Patentamt**

**European Patent Office**

**Office européen des brevets**

(19)

(11) **EP 0 817 165 B1**

(12) **EUROPEAN PATENT SPECIFICATION**

(45) Date of publication and mention
of the grant of the patent:
**23.08.2000 Bulletin 2000/34**

(51) Int Cl.$^7$: **G10K 11/178**, F01N 1/00

(21) Application number: **97115496.8**

(22) Date of filing: **30.04.1993**

(54) **Noise control device**

Lärmkontrollegerät

Dispositif antibruit

(84) Designated Contracting States:
**DE FR GB**

(30) Priority: **01.05.1992 JP 11278892**
          **18.05.1992 JP 12497492**
          **19.05.1992 JP 12629492**

(43) Date of publication of application:
**07.01.1998 Bulletin 1998/02**

(62) Document number(s) of the earlier application(s) in
accordance with Art. 76 EPC:
**93911968.1 / 0 592 693**

(73) Proprietor: **FUJITSU TEN LIMITED**
**Kobe-shi, Hyogo 652-8510 (JP)**

(72) Inventors:
  • **Sakiyama,Kazuhiro**
    **Akashi-shi Hyogo 674 (JP)**

  • **Nagami,Masaaki**
    **Akashi-shi Hyogo 674 (JP)**
  • **Sako,Kazuya**
    **Kakogawa-shi Hyogo 675 (JP)**
  • **Babasaki,Masahiro**
    **Takatsuki-shi Osaka 569 (JP)**

(74) Representative: **Skone James, Robert Edmund**
**GILL JENNINGS & EVERY**
**Broadgate House**
**7 Eldon Street**
**London EC2M 7LH (GB)**

(56) References cited:
  **EP-A- 0 479 367**       **EP-A- 0 481 450**
  **WO-A-89/07701**        **FR-A- 2 314 844**

  • **PATENT ABSTRACTS OF JAPAN vol. 009, no.**
    **142 (M-388), 18 June 1985 & JP 60 022010 A**
    **(NISSAN JIDOSHA KK), 4 February 1985,**

EP 0 817 165 B1

**Description**

BACKGROUND OF THE INVENTION

1. Field of the Invention

The present invention relates to a noise control device which silences noise by outputting from speakers the signals having a phase opposite to and a sound pressure equal to those of noise emitted from the muffler to an automobile, and more particularly to a device for decreasing space occupied by an actuator thereof, for increasing frequency band of the actuator, and for preventing the noise-decreasing effect from changing in space.

2. Description of the Related Art

Passive silencing devices such as mufflers or the like have heretofore been used for reducing noise produced by internal combustion engines accompanying, however, improvements from the standpoint of sizes, silencing performance, etc. There has, on the other hand, been proposed an active noise control device which cancels noise by outputting from speakers a compensation sound having a phase opposite to and a sound pressure equal to those of noise generated from the source of noise. However, putting the active noise control device into practical use has been belated due to its frequency characteristics or insufficient stability. In recent years, however, signal processing technology using digital circuits has been developed making it possible to treat frequencies over extended ranges. Therefore, many practicable noise control devices have now been proposed (for example, see Japanese Unexamined Patent Publication (Kokai) No. 63-311396).

The above publication discloses an active noise control device of the so-called two-microphone one-speaker type made up of a combination of a feedforward system and a feedback system in which noise is detected by a microphone for noise source that is installed on the upstream side of the duct, a signal having a phase opposite to and a sound pressure equal to those of the noise is formed by a signal processing circuit and is output from a speaker installed on the downstream side of the duct, and the silenced result is detected by a microphone at the silencing point and is fed back.

Next, described below is an actuator constituted by the speakers and the like.

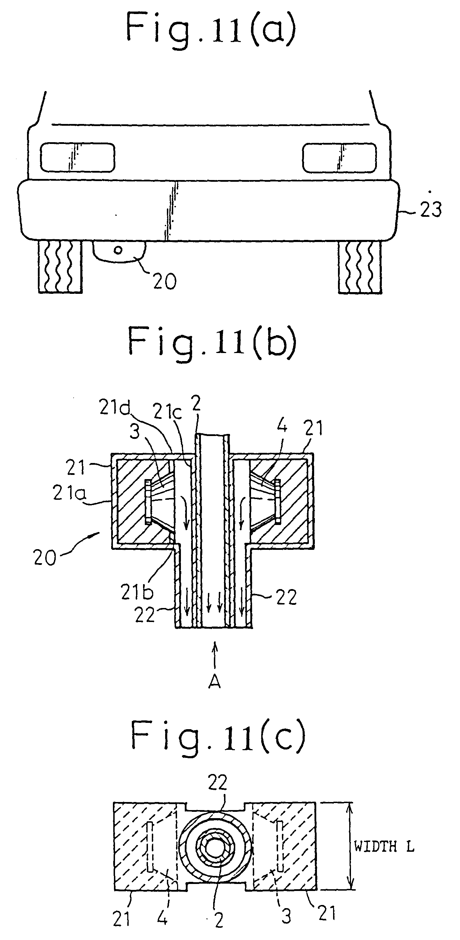

Fig. 11 is a sectional view illustrating the constitution of an actuator 20 in a conventional noise control device. As shown in the diagram (a), a rear portion of an automobile is provided with an actuator 20 of the noise control device near a tail pipe or a terminal pipe through a muffler. The actuator 20 shown in the diagram (b) viewed from the upper direction to the ground comprises two speakers 3 and 4 symmetrically arranged with respect to a tail pipe 2 which emits noise at the terminal pipe of a muffler that silences exhaust noise of an automobile, an enclosure 21 that closes the rear portions of the speakers 3 and 4, and a silencing sound guide portion 22 that guides silencing sound from the front surfaces of the speakers 3 and 4 to the outlet of the tail pipe 2 along therewith. Space formed by the enclosure 21 at the rear portions of the speakers 3 and 4 is depicted by hatched lines. The enclosure 21 comprises a plate 21a surrounding the rear portions of the speakers 3 and 4, a front plate 21b for mounting the opening portions of the speakers 3 and 4, a plate 21c opposed to the front surfaces of the speakers 3 and 4 in order to guide the silencing sound from the front surfaces of the speakers 3 and 4 to the silencing sound guide portion 22, and a side plate 21d. The diagram (c) is a front view of when the opening of the tail pipe 2 is viewed from the direction of arrow A in the diagram (b). As shown in the diagram (c), the enclosure 21 has an oblong shape as viewed from the direction of arrow A. The front surfaces of the speakers 3 and 4 are arranged vertically in relation to the ground.

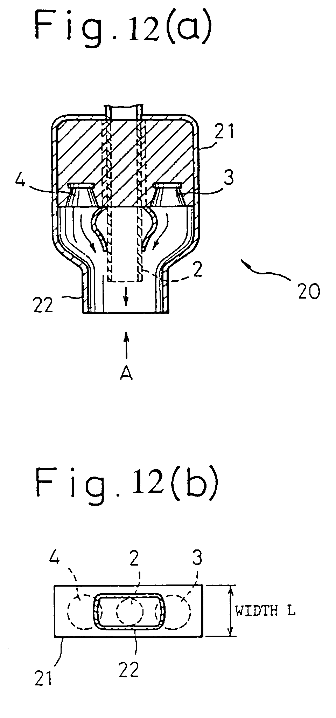

Fig. 12 is a view illustrating the constitution of an actuator 20 in another conventional noise control device. What is different in the diagrams (a), (b) from Fig. 11 is that the front surfaces of the speakers 3 and 4 do not face each other but are directed backward toward the rear of the automobile, that is, in the same direction as the front surface of the tail pipe. What is common in Fig. 12 with Fig. 11 is that the front surfaces of the speakers 3 and 4 are arranged vertically in relation to the ground.

In the actuator 20 for the conventional noise control device, the diameter of the speakers 3 and 4 must be increased and the volume of space defined by the enclosure 21 must be increased in order to decrease noise of low frequencies (50 Hz to 300 Hz). That is, as shown in Fig. 11 or Fig. 12 in order to hold speakers 3 and 4 for producing bass sound, the enclosure 21 must have a width which is at least as wide as the diameter of the openings of the speakers 3 and 4. In practice, however, the actuator 20 must be installed near the outlet of the tail pipe 2 where space is narrow. If the enclosure 21 is too great in width, a fist problem arises in that the enclosure 21 is possibly in contact with the ground due to vibration when the automobile is moving.

In view of the above-mentioned problem, therefore an object of the present invention is to provide an actuator of a noise control device in which the width L of the enclosure 21 can be reduced.

Next, since the enclosure 21 does not have a great volume, a second problem arises in that the control of noise cannot be improved due to the large amount of bass vibration of the speakers, so that frequency band of the speakers becomes narrow.

WO 89/07701 describes an active sound attenuation system for combustion engine exhaust systems. The system uses counter noise acoustic wave generators that are protected from the environment of a medium propagating undesirable noise by an acoustically tuned anti-noise chamber. To provide for noise cancellation at the outlet end of an exhaust pipe the anti-noise chamber has an annular opening disposed substantially in the plane of the exhaust pipe outlet thereby giving an effective common point source for the propagated undesirable noise and the counter-noise acoustic wave.

In view of the above-mentioned problems, therefore another object of the present invention is to provide an actuator of a noise control device which can substantially make the volume thereof great.

Further, the silenced result as described above is detected by a microphone (sensor) to be used for feedback. In this case, the microphone should be positioned near the speaker to obtain a good effect, but since this silenced result is distributed in space, a third problem arises in that positioning a microphone only near the speaker is not sufficient to avoid disparity of the cancelled effect in space.

In view of the above-mentioned problems, therefore another object of the present invention is to provide an actuating means of a noise control device which can avoid disparity of the cancelled effect in space.

SUMMARY OF THE INVENTION

According to the present invention, we provide a noise control device for silencing noise emitted from a tail pipe of an automobile, the noise control device being disposed at the outlet of the tail pipe of a muffler and being configured so as to emit noise that silences exhaust noise of the automobile, the noise control device comprising a plurality of speakers to output silencing sound having a phase opposite to and a sound pressure equal to noise sound emitted from the tail pipe, characterised by an enclosure which closes the rear portions of the speakers and a duct connecting said enclosure with the closed spaced formed by a bumper for absorbing an impact in the case of a collision, the rear portions of the speakers using the closed space as a resonant cavity.

Further, the speakers may be provided outside of the closed space and the resonant cavity of the speakers may be connected to the closed space with a duct. Also, the closed space of a trunk compartment for holding luggage may be used as resonant cavity of a plurality of speakers. Next, the muffler may be wrapped with a heat-shielding plate and removed to be installed on the back side of the bumper along the lengthwise direction of the bumper, and the speakers may be arranged in a vacant space after having removed the muffler. Also, instead of speakers, a vibration plate may be embedded in the bumper and an excitation portion may be coupled to the vibration plate to excite the plate into vibration. The tail pipe may also be divided into multiple tail pipes, and each tail pipe may be allowed to pass through the bumper, and the vibration plate and the excitation portion may be provided around each tail pipe. According to the noise control device of the present invention, the volume of the resonant cavity behind the speaker may be great so as to silence large amplitude bass noise efficiently.

Also a sound wave for silencing noise is produced by the excitation of the vibration plate embedded in the bumper, so that an actuator, such as a speaker that has little tolerance to heat and humidity is not necessary to be used. Therefore, this actuator exhibits increased resistance to heat and humidity.

BRIEF DESCRIPTION OF THE DRAWINGS

Fig. 1 is a diagram illustrating the constitution of a noise control device which is a prerequisite of an embodiment of the present invention;

Fig. 2 is a diagram illustrating the constitution of an actuator 20 of the noise control device according to an embodiment of the present invention, in which a speaker uses a bumper as an enclosure;

Fig. 3 and Fig. 4 are graphs explaining the influence of a resonant-cavity in a speaker which extends the frequency band width thereof;

Fig. 5 is a diagram illustrating a first modified constitution of the actuator 20 of Fig. 2, which is provided on the outside of an enclosure-bumper 23;

Fig. 6 is a diagram illustrating a second modified constitution of the actuator 20 of Fig. 2 in which a speaker uses a trunk compartment as a resonant-cavity;

Fig. 7 and Fig. 8 are diagrams illustrating a third modified configuration of the actuator of Fig. 2, in which a muffler 1 is removed to be set into a bumper 23 and thereby the speakers 3 and 4 are provided at the position from which the muffler 1 was removed;

Fig. 9 is a diagram illustrating a fourth modified configuration of the actuator of Fig. 2, in which a portion of the body of the bumper 23 is used as a vibration plate 26 instead of the speakers 3 and 4;

Fig. 10 is a diagram illustrating a fifth modified configuration of the actuator 20 of Fig. 9 , in which two places in a portion of the bumper 23 are used as a vibration plate 26;

Fig. 11 is a diagram illustrating the constitution of an actuator 20 in a conventional noise control device;

Fig. 12 is a diagram illustrating the constitution of another actuator 20 in a conventional noise control device.

## DETAILED DESCRIPTION OF THE PREFERRED EMBODIMENTS

Embodiments of the present invention will now be described with reference to the drawings.

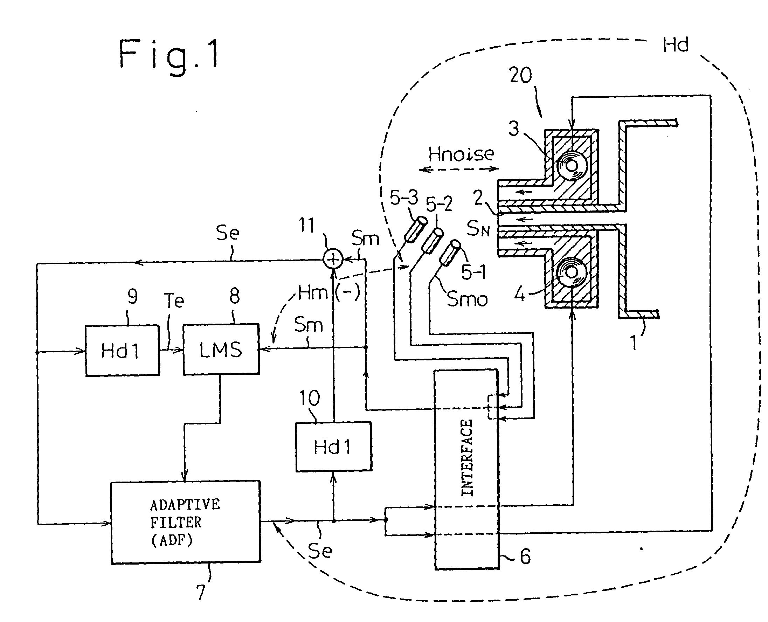

Fig. 1 is a diagram illustrating the constitution of a noise control device which is a prerequisite of an embodiment of the present invention. The noise control device diagramed here is constituted by two speakers 3 and 4 for silencing noise emitted from a tail pipe 2 that is the terminal pipe of a muffler 1 that silences exhaust noise of an automobile, three microphones 5-1, 5-2 and 5-3 which are arranged as will be described later to trap, as an error signal, residual noise consisting of noise from the tail pipe 2 and silencing sound which is emitted from the speakers 3 and 4 and has a phase opposite to and a sound pressure equal to those of the noise, an interface 6 which converts a signal to the speakers 3 and 4 into an analog signal from the digital form and amplifies it, converts analog signals of the microphones 5-1, 5-2 and 5-3 into digital signals and amplifies them, and adaptive filter 7 of FIR (finite impulse response) which inputs a reproduced noise signal that will be described later as to-be-controlled signal and forms a compensation sound that silences noise via the interface 6, a coefficient updating means 8 which inputs a synthesized signal of error signals from the microphones 5-1, 5-2 and 5-3 and updates the filter coefficient of FIR of the adaptive filter 7, a first transfer characteristics simulating means 9 which inputs said reproduced noise signal and simulates transfer characteristics of from the output of the adaptive filter 7 through the interface 6, speakers 3 and 4, microphones 5-1, 5-2 and 5-3 up to the coefficient updating means 8 in order to provide the filter coefficient of the coefficient updating means 8, a second transfer characteristics simulation means 10 which inputs a compensation signal from the adaptive filter 7 and has the same transfer characteristics as the above first transfer characteristics simulation means 9, and a differential signal calculation means 11 which calculates a differential signal between an output signal of the second transfer characteristics simulation means 10 and a synthesized signal of output signals of the microphones 5-1, 5-2 and 5-3, and sends the differential signal as a reproduced noise signal to the adaptive filter 7 and to the first transfer characteristics simulation means 9. Here, the adaptive filter 7, coefficient updating means 8, first transfer characteristics simulation means 9, second transfer characteristics simulation means 10 and differential signal calculation means 11 are constituted by digital signal processing units (DSP).

Described below is a series of operations of the noise control device. Here, transfer characteristics of from the output of the adaptive filter 7 to the microphone 5-1, 5-2, 5-3 are denoted by Hd, average transfer characteristics of from the microphones 5 to the filter coefficient updating means 8 are denoted by Hm, and average transfer characteristics of from the tail pipe 2 which is the source of noise to the microphones 5 are denoted by Hnoise. Moreover, a noise signal from the tail pipe 2 is denoted by Sn, an output signal from the microphones 5 is denoted by Sm0, a compensation signal from the adaptive filter 7 is denoted by Sc, an input signal to the coefficient updating means 8 is denoted by Sm and a differential signal from an output signal of the differential signal calculation means 11 is denoted by Se. The differential signal will be used later as a reproduced noise signal to be input into the adaptive filter.

Then, the transfer characteristics Tdl simulated by the first transfer characteristics simulation means 9 and the second transfer characteristics simulation means 10 are given as,

$$Hdl = Hd \cdot Hm \qquad (1)$$

and a signal Sm0 detected by the microphone 5 becomes as follows:

$$Sm0 = Sn \cdot Hnoise + Sc \cdot Hd \qquad (2)$$

From the above-mentioned constitution and the above formulas (1) and (2), the differential signal Se which is a reproduced noise signal input to the adaptive filter 7 and is calculated by the differential signal calculation means 11, is obtained as follows:

$$Se = Sm0 \cdot Hm - Sc \cdot Hdl$$

$$= (Sn \cdot Hnoise + Sc \cdot Hd) \cdot Hm - Sc \cdot Hd \cdot Hm$$

$$= (Sn \cdot Hnoise + Sc \cdot Hd - Sc \cdot Hd) \cdot Hm$$

$$= Sn \cdot Hnoise \cdot Hm \qquad (3)$$

The input signal Sm to the coefficient updating means 8 is given as,

$$Sm = Sm0 \cdot Hm \qquad (4)$$

The other input signal Te is obtained by the first transfer characteristics simulation means 9 considering the transfer characteristics Tdl in relation to the reproduced noise signal Se. In the adaptive filter 7, the filter coefficient is changed by the coefficient updating means 8, so that the input signal Sm becomes zero. Therefore, under the condition where Sm = 0, i.e., Sm0 = 0, the compensation signal Sc output from the adaptive filter 7 is given from the above equation (2) as follows:

$$Sc \fallingdotseq -Sn \cdot Hnoise/Hd \qquad (5)$$

The coefficient updating means 8 finds a filter coefficient ($Ck(n)$; K: number of stages) of FIR of the adaptive filter 7 by the method of least squares in compliance with the following equation,

$$Ck(n) = Ck(n - 1) + (Sm(n) \cdot \alpha/q(n + k - 1) \qquad (6)$$

where $\alpha$ is a coefficient of convergence, $Sm(n)$ is a synthesized signal of the microphones 5-1, 5-2 and 5-3, $q(n + k - 1)$ is a normalizing signal from the first transfer characteristics simulation means 9, and n is an ordinal number of a digital signal.

In the foregoing was described the noise control device in which a signal of silencing sound for silencing noise is formed by the speakers 3 and 4. Now, described below is an actuator 20 constituted by the speakers 3, 4 and the like.

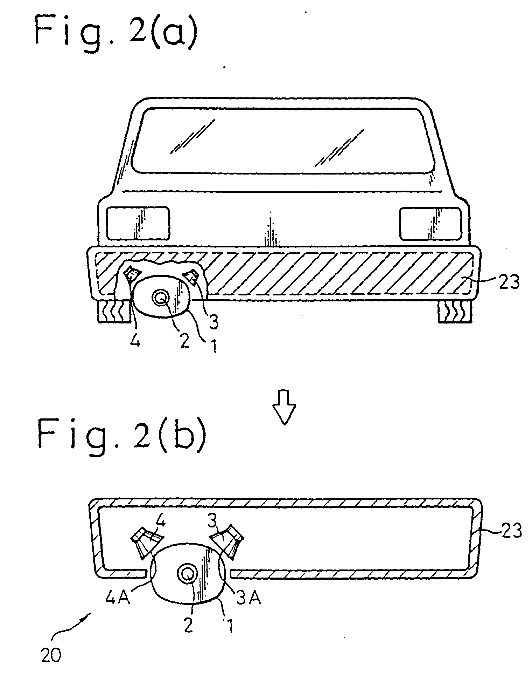

Fig. 2 is a diagram illustrating the constitution of an actuator for the noise control device according to an embodiment of the present invention, in which a speaker uses a bumper as an enclosure. The diagram (a) is a rear view of a passenger car which is usually provided at its rear end with a bumper that absorbs impact in case of collision to protect the body. The bumper is usually made of an urethane material in the form of a plate. In order to improve woofer characteristics of the speakers, furthermore, it is essential to increase the volume of the enclosure to facilitate the movement of the speaker corns. The actuator 20 according to this embodiment comprises speakers 3 and 4, and an enclosure 23 that also serves as a bumper which, as shown in the diagram (b), defines closed space to accommodate the speakers 3, 4 in a manner that the front surfaces of the speakers 3 and 4 are symmetrically arranged with respect to the tail pipe 2, such that silencing sound is directly emitted to near the outlet of the tail pipe 2 through openings 3A and 4A.

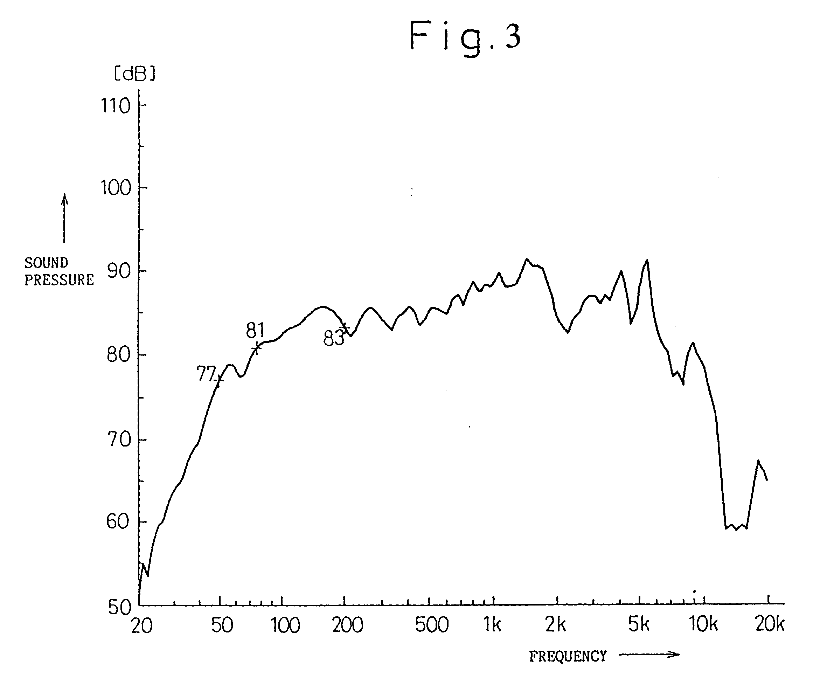

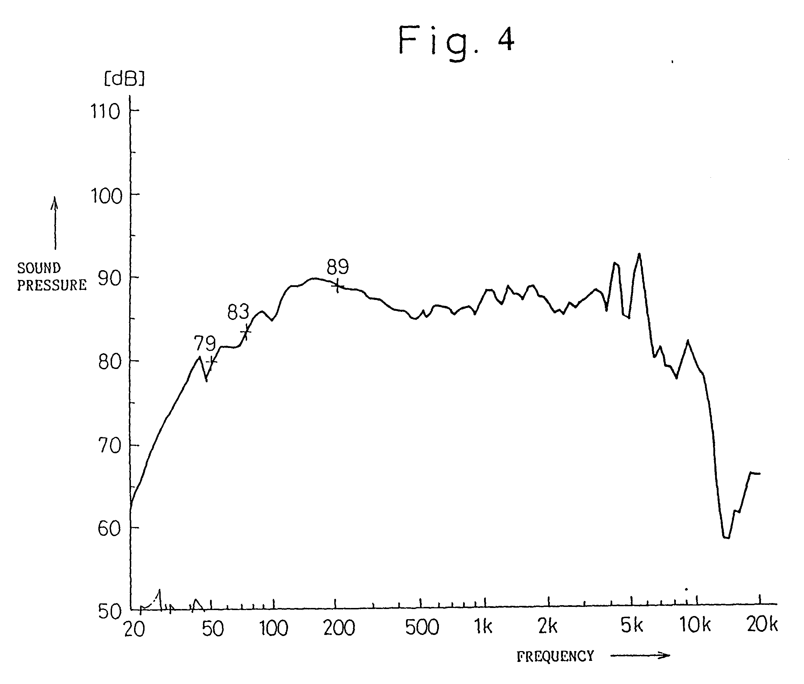

Fig. 3 and Fig.4 are graphs explaining the influence of a resonant-cavity in a speaker which extends the frequency band thereof. The relations between the noise frequency and the sound pressure in the case that the volume of resonant-cavity is 6.2 liter and is 600 liter are shown in Fig. 3 and Fig. 4. It will be understood that the output of the sound pressure in a low frequency region increases as the volume of the resonant-cavity is increased. According to this embodiment, the speakers 3 and 4 are arranged at optimum positions with respect to the tail pipe 2, and the enclosure 23 that also serves as a bumper is allowed to have a greatly increased volume though it was so far difficult to obtain. This helps increase reproducing ability against bass noise of large amplitudes. Moreover, the above constitution makes it possible not only to effectively utilize space but also to increase strength since the enclosure 23 that also serves as a bumper exhibits a large flexural rigidity. Besides, an enclosure 21 having a large volume is not required, offering freedom in the layout of the actuator 20 and enabling the electronic muffler itself to be realized in a decreased size.

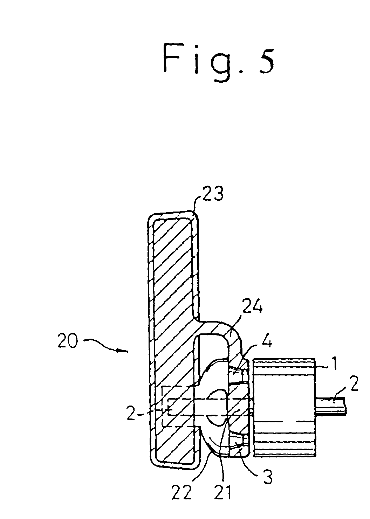

Fig. 5 is a diagram illustrating a first constitution of the actuator 20 of Fig. 2, which is provided outside of an enclosure-bumper 23. The actuator 20 diagramed here comprises speakers 3 and 4, a narrow enclosure 21 which closes the rear portions of the speakers 3, 4 and is installed near the muffler 1, a silencing sound guide portion 22 which guides the silencing sound from the front surfaces of the speakers 3, 4 to the tail pipe 2, an enclosure 23 which also serves as a bumper that defines closed space, and a duct 24 consisting of a flexible tube that spatially communicates the enclosure 23 that serves as the bumper and the enclosure 21 with each other. According to this embodiment, the enclosure 23 that also serves as a bumper helps increase the volume of the enclosure while maintaining space near the muffler 3 small, making it possible to increase reproducing ability against bass noise of large amplitudes like in the first embodiment.

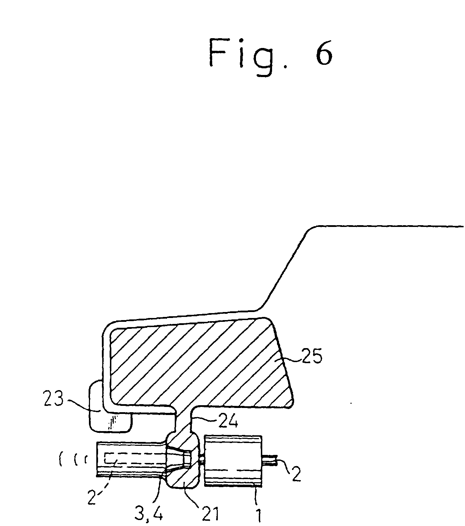

Fig. 6 is a diagram illustrating a second modified constitution of the actuator 20 of Fig. 2 in which a speaker uses a trunk compartment as a resonant-cavity. The actuator 20 shown here comprises speakers 3 and 4, a narrow enclosure 21 which contains the speakers 3 and 4 in a closed manner and is installed near the muffler 1, an enclosure 25 which also serves as a trunk room for holding luggage, the trunk room being closed, and a duct 24 consisting of a flexible tube which spatially communicates the enclosure 25 which also serves as the trunk room and the enclosure 21 with each other. This embodiment exhibits the effects same as those of the first and second embodiments.

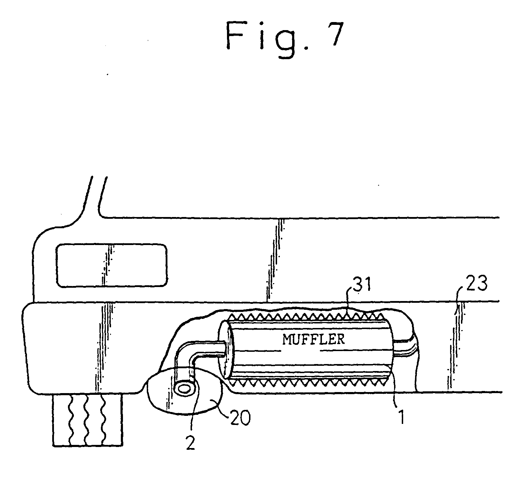

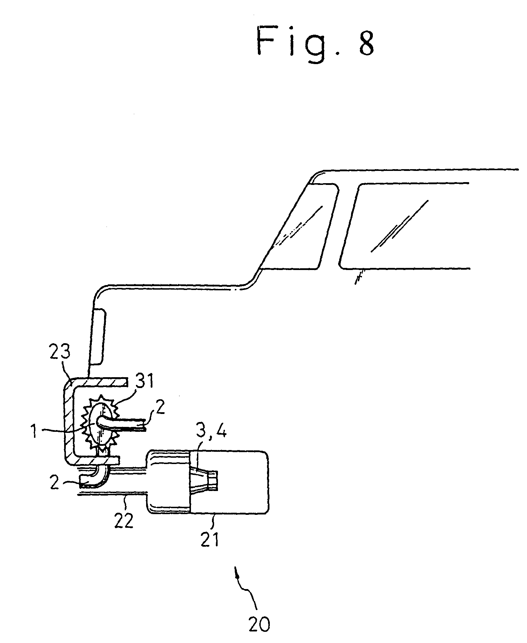

Fig. 7 and Fig. 8 are diagrams illustrating a third modified constitution of the actuator 20 of Fig.2, in which a muffler 1 is removed to be set into a bumper 23 and thereby the speakers 3 and 4 are provided in the space from which the muffler 1 was removed. As shown in Fig. 7, the muffler 1 is installed on the back side of the bumper 23 at the rear part of the automobile along the lengthwise direction of the bumper 23 and is wrapped with the heat-shielding plate 31 so that the heat will not be radiated therefrom, and the tail pipe 2 is drawn toward the rear. The actuator 20 is disposed at the position where the muffler 1 used to exist. With the laterally elongated muffler 1 wrapped with the heat-shielding plate 31 being installed inside the bumper 23 as shown in Fig. 8, the actuator 20 comprises speakers 3 and 4, an enclosure 21 which is disposed at the position of the muffler 1 to close the rear portions of the speakers 3 and 4, and is allowed to have a sufficiently large volume for maintaining woofer characteristics, and a silencing sound guide portion 22 that is communicated to the outlet of the tail pipe 2 which is the outlet of the exhaust pipe. According to this embodiment, therefore, the muffler 1 that is installed inside the bumper 23 makes it possible to mount the enclosure of the actuator 20 having a sufficiently large capacity in the initial space. Therefore, the actuator 20 exhibits improved sound pressure reproducing ability being little affected by the heat.

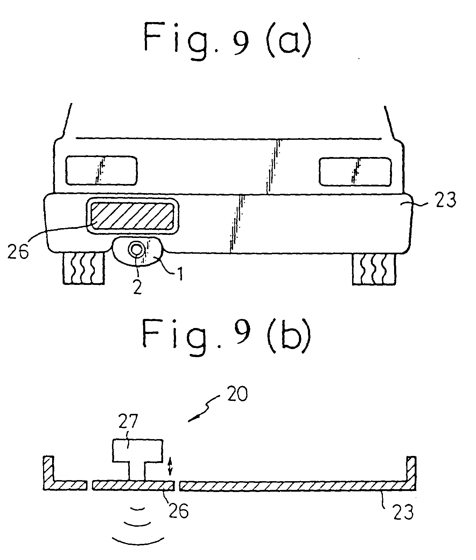

Fig. 9 is a diagram illustrating a fourth modified constitution of the actuator 20 of Fig. 2, in which a portion of the body of the bumper 23 is used as a vibration plate 26 instead of the speakers 3 and 4. Referring to the diagram (a), the actuator 20 comprises a vibration plate 26 buried in the bumper 23 near the tail pipe 2 of the muffler 1 at the rear portion of the automobile, and an excitation portion 27 that excites the vibration plate 26 on the back side of the bumper 23. The diagram (b) is a sectional view from the upper direction. As shown in the diagram (b), the excitation portion 27 and the vibration plate 26 are coupled together, and the vibration plate 26 is vibrated by the excitation portion 27 to form silencing sound. The excitation portion 27 may be the one that is placed in the market. The whole bumper 23 may be used as the vibration plate 26. In this case, the plate portion of the bumper 23 vibrates with the fastening portions (not shown) of the bumper 23 as nodes. According to this embodiment, therefore, what substantially occupies the volume is the excitation portion 27 only in the actuator 20 that utilizes the vibration plate 26 and the excitation portion 27 instead of the speakers. Therefore, the actuator 20 is realized in a spatially reduced size and can be used over an extended range of applications under the heated and humid (moisture) conditions where the speakers cannot be used, lending itself well for being used as an electronic muffler.

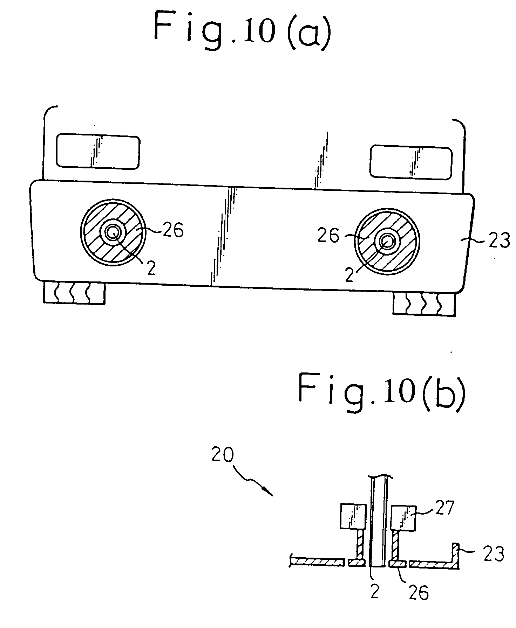

Fig. 10 is a diagram illustrating a fifth modified configuration of the actuator 20 of Fig. 9, in which two places in a portion of the bumper 23 are used as a vibration plate 26. With reference to the diagram (a) which shows the back surface of the automobile, the actuator 20 has the tail pipe 2 that protrudes to be nearly in flush with the bumper 23 through the opening thereof, and further comprises a vibration plate 26 of a doughnut shape buried in the bumper 23 to surround the tail pipe 2 and an excitation portion 27 that excites the vibration plate 26 around the tail pipe 2 on the back side of the bumper 23 as shown in a sectional view of the diagram (b) that is viewed from the upper direction. With reference to the diagram (a), when there are two tail pipes 2 at the rear portion, the actuators 20 should be provided for them, respectively, in the same manner as described above. The above-mentioned modified constitution makes it possible to obtain the effects same as those of the fifth embodiment. According to the present invention as described above, a large volume is provided for the rear portions of the speakers owing to closed space defined by the enclosure which also serves as a bumper that absorbs impact in case of collision. Therefore, bass noise of large amplitudes can be efficiently silenced. With the vibration plate being excited buried in the bumper, furthermore, the device exhibits increased resistance against the heat and humidity.

[Industrial Applicability]

The speakers of the noise control device according to the present invention can be used for controlling noise discharged with the exhaust gas of various automobiles and are suitable to reduce the volume of a speaker, to make the frequency band thereof broad and prevent the noise-decreasing effect from changing in space.

**Claims**

1. A noise control device for silencing noise emitted from a tail pipe (2) of an automobile, the noise control device being disposed at the outlet of the tail pipe (2) of a muffler (1) and being configured so as to emit noise that silences exhaust noise of the automobile, the noise control device comprising a plurality of speakers (3,4) to output silencing sound having a phase opposite to and a sound pressure equal to noise sound emitted from the tail pipe (2), characterised by an enclosure (21) which closes the rear portions of the speakers (3,4) and a duct (24) connecting said enclosure (21) with the closed spaced formed by a bumper (23) for absorbing an impact in the case of a collision, the rear portions of the speakers using the closed space as a resonant cavity.

2. The noise control device of claim 1 characterized in that a closed space of a trunk compartment for holding luggage is used instead of the closed space formed by a bumper.

3. A noise control device for silencing noise emitted from a tail pipe (2) of an automobile, the noise control device being disposed at the outlet of the tail pipe (2) of a muffler (1) and being configured so as to emit noise that silences exhaust noise of the automobile, characterised by comprising a vibration plate (26) embedded in a bumper (23) for absorbing an impact in the case of a collision, the bumper forming a closed space, and further comprising an excitation portion (27) coupled to the vibration plate (26) to excite the vibration plate.

4. The noise control device according to claim 3, characterised in that said tail pipe (2) is divided into a plurality of tail pipes, each of said plurality of tail pipes passing through said bumper (23) and in that a vibration plate (26) and excitation portion (27) is provided around each of the tail pipes.

**Patentansprüche**

1. Geräuschkontrollvorrichtung zur Dämpfung von Geräuschen, die von einem Auspuffrohr (2) eines Automobils erzeugt werden, wobei die Geräuschkontrollvorrichtung an der Auslaßöffnung des Auspuffrohrs (2) eines Schalldämpfers (1) angeordnet und so konfiguriert ist, daß sie Geräusche aussendet, welche die Abgasgeräusche des Automobils dämpfen, wobei die Geräuschkontrollvorrichtung eine Vielzahl an Lautsprechern (3, 4) umfaßt, um Dämpfungsgeräusche zu erzeugen, deren Phase der Phase jener Geräusche, die vom Auspuffrohr (2) erzeugt werden, entgegengesetzt ist, und deren Schalldruck dem Schalldruck der vom Auspuffrohr (2) erzeugten Geräusche entspricht, dadurch gekennzeichnet, daß ein Gehäuse (21) vorhanden ist, welches die hinteren Abschnitte der Lautsprecher umschließt (3, 4), und ein Kanal (24), der das Gehäuse (21) mit dem geschlossenen Raum verbindet, welcher von einem Stoßdämpfer (23) zum Absorbieren eines Stoßes im Falles eines Zusammenstoßes gebildet wird, wobei die hinteren Abschnitte der Lautsprecher den geschlossenen Raum als Resonanzraum verwenden.

2. Geräuschkontrollvorrichtung nach Anspruch 1, dadurch gekennzeichnet, daß ein geschlossener Raum eines Kofferraumes zum Aufnehmen von Gepäck anstelle des von einer Stoßstange gebildeten geschlossenen Raumes verwendet wird.

3. Geräuschkontrollvorrichtung zum Dämpfen von Geräuschen, die von einem Auspuffrohr (2) eines Automobils erzeugt werden, wobei die Geräuschkontrollvorrichtung an der Auslaßöffnung des Auspuffrohrs (2) eines Schalldämpfers (1) angeordnet ist und so konfiguriert ist, daß sie Geräusche erzeugt, welche die Abgasgeräusche des Automobils dämpfen, dadurch gekennzeichnet, daß sie eine Vibrationsplatte (26) umfaßt, welche in eine Stoßstange (23) zum Absorbieren eines Stoßes im Falle eines Zusammenstoßes eingebettet ist, wobei die Stoßstange einen geschlossenen Raum bildet, und daß sie weiters einen Erregungsabschnitt (27) umfaßt, der an die Vibrationsplatte (26) angekoppelt ist, um die Vibrationsplatte zu erregen.

4. Geräuschkontrollvorrichtung nach Anspruch 3, dadurch gekennzeichnet, daß das Auspuffrohr (2) in eine Vielzahl von Auspuffrohren unterteilt ist, wobei jedes der Vielzahl an Auspuffrohren durch die Stoßstange (23) geführt wird, und daß eine Vibrationsplatte (26) und ein Erregungsabschnitt (27) rund um jedes Auspuffrohr vorhanden sind.

**Revendications**

1. Dispositif de protection anti-bruit servant à amortir le bruit émis par une conduite arrière d'échappement (2) d'une automobile, le dispositif de protection anti-bruit étant disposé au niveau de l'orifice de sortie de la conduite arrière d'échappement (2) d'un pot d'échappement (1) et étant configuré de façon à émettre un bruit qui amortit le bruit d'échappement de l'automobile, le dispositif de protection anti-bruit comprenant une pluralité de haut-parleurs (3, 4) destinés à émettre un son d'amortissement ayant une phase opposée et une pression acoustique égale à celles du bruit émis par la conduite arrière d'échappement (2), caractérisé par une enceinte (21) qui enferme les parties arrières des haut-parleurs (3, 4) et un conduit (24) qui relie ladite enceinte (21) à l'espace clos formé par un pare-chocs (23) destiné à absorber un impact en cas de collision, les parties arrières des haut-parleurs utilisant l'espace clos comme caisse de résonance.

2. Dispositif de protection anti-bruit selon la revendication 1, caractérisé en ce que l'espace clos d'un coffre à bagages est utilisé à la place de l'espace clos formé par un pare-chocs.

3. Dispositif de protection anti-bruit servant à amortir le bruit émis par une conduite arrière d'échappement (2) d'une automobile, le dispositif de protection anti-bruit étant disposé au niveau de l'orifice de sortie de la conduite arrière d'échappement (2) d'un pot d'échappement (1) et étant configuré de façon à émettre un bruit qui amortit le bruit d'échappement de l'automobile, caractérisé en ce qu'il comprend une plaque vibrante (26) logée dans un pare-chocs (23) destiné à absorber un impact en cas de collision, le pare-chocs formant un espace clos, et en ce qu'il comprend en outre une partie excitatrice (27) accouplée à la plaque vibrante (26) pour exciter la plaque vibrante.

4. Dispositif de protection anti-bruit selon la revendication 3, caractérisé en ce que ladite conduite arrière d'échappement (2) est divisée en une pluralité de conduites arrière d'échappement, chacune desdites conduites arrière d'échappement traversant un pare-chocs (23), et en ce qu'une plaque vibrante (26) et une partie excitatrice (27) sont disposées autour de chacune des conduites arrière d'échappement.

EP 0 817 165 B1

# Fig.1

Hd

20

3

Hnoise

2

$S_N$

5-3  5-2

5-1

Smo

4

1

Se

11

Sm

Hm (-)

9  Te  8

Hd1

LMS

Sm

10

Hd1

ADAPTIVE FILTER (ADF)

INTERFACE

6

Se

7

Fig. 2(a)

Fig. 2(b)

# Fig.3

Fig. 4

# Fig. 5

Fig. 6

25

23

24

2

2

3,4    21    1

# Fig. 7

# Fig. 8

# Fig. 9 (a)

# Fig. 9 (b)

Fig. 10 (a)

Fig. 10 (b)

# Fig.11(a)

23

20

# Fig.11(b)

21d  21c  2  4  21
3
21
21a
20
21b
22
22
A

# Fig.11(c)

22

WIDTH L

21  4  2  3  21

Fig.12(a)

Fig.12(b)